# EUROPEAN PATENT SPECIFICATION

(11) **EP 4 094 969 B1**
(45) Date of publication and mention of the grant of the patent: **08.01.2025**
(21) Application number: 22173167.2
(22) Date of filing: 13.05.2022
(51) Int. Cl.: B60K 28/06, B60W 50/12, B60W 10/06, B60W 10/184, B60W 10/20, B60W 30/09, B60W 50/14, B60W 60/00, B60W 50/08, B60W 40/08, B60W 50/00

(54) **VEHICLE CONTROL APPARATUS, VEHICLE AND VEHICLE CONTROL METHOD**
FAHRZEUGSTEUERUNGSVORRICHTUNG, FAHRZEUG UND FAHRZEUGSTEUERUNGSVERFAHREN
APPAREIL DE COMMANDE DE VÉHICULE, VÉHICULE ET PROCÉDÉ DE COMMANDE DE VÉHICULE

(30) Priority: 21.05.2021 JP 2021085874
(43) Date of publication of application: 30.11.2022
(73) Proprietor: MAZDA MOTOR CORPORATION, Hiroshima 730-8670 (JP)
(72) Inventor: TOCHIOKA, Takahiro, Fuchu-cho, Aki-gun (JP); YAMAMOTO, Yasunori, Fuchu-cho, Aki-gun (JP); IWASHITA, Yohei, Fuchu-cho, Aki-gun (JP); FUJIHARA, Yoshitaka, Fuchu-cho, Aki-gun (JP); SUGANO, Takashi, Fuchu-cho, Aki-gun (JP)
(74) Representative: Müller-Boré & Partner Patentanwälte PartG mbB

(56) References cited:
- EP-A1- 3 343 306
- EP-A2- 3 187 358
- US-A1- 2012 212 353
- US-A1- 2018 194 365
- US-A1- 2018 268 695

## Description

### [Technical Field]

The present invention relates to a vehicle control apparatus, a vehicle and a vehicle control method and, in particular, to a vehicle control apparatus and a vehicle control method for driving assistance.

### [Background Art]

A vehicle that can travel by automated driving technology (or autonomous driving technology) has been developed. Under automated driving control, the vehicle travels by proactively performing a vehicle operation (SAE Level of Driving Automation 3 or higher). In other words, a driver does not have to perform the vehicle operations such as of an accelerator, a brake, and a steering wheel. The automated driving technology is useful for the driver with normal driving ability, and is particularly useful for an elderly person with reduced driving ability and a person with mild cognitive impairment (MCI) in terms of travel safety.

Meanwhile, some of the drivers have a desire to drive the vehicle by himself/herself. However, in the case where required driving ability, which is required for the driver according to traffic environment or the like, is not balanced with the driver's current driving ability, the driver may feel bored of or, conversely, be psychologically stressed by driving. In view of the above, the present applicant has proposed a vehicle control apparatus that provides driving assistance or a driving load so as to balance the required driving ability with the current driving ability (see Patent document 1, for example). With this vehicle control apparatus, the driver can drive the vehicle in a balancing state between the required driving ability and the current driving ability. As a result, the driver can enjoy and concentrate on safe driving regardless of difficulty of the traffic environment or a level of the current driving ability.

### [Prior Art Documents]

### [Patent documents]

[Patent document 1] Japanese Patent No. 6,555,649

US 2012/212353 A1 describes that methods of assessing driver behavior include monitoring vehicle systems and driver monitoring systems to accommodate for a driver's slow reaction time, attention lapse and/or alertness. When it is determined that a driver is drowsy, for example, the response system may modify the operation of one or more vehicle systems.

### [Summary]

### [Problem to be solved]

In the technique disclosed in Patent document 1, in the case where the driver's current driving ability is relatively insufficient, the necessary driving assistance is provided. Thus, safety of vehicle driving is enhanced. However, since the driver has to rely on the vehicle for the insufficient driving ability, this technique cannot maintain or improve the driver's driving ability. For this reason, this technique cannot extend the driver's safe driving life.

The present invention has been made to solve a problem as described above, and therefore has a purpose of providing a vehicle control apparatus, vehicle and a vehicle control method capable of maintaining and improving a driver's driving ability while securing safe driving by automated driving.

### [Means for solving the Problem]

The above purpose is achieved by the invention as defined in independent claims.

According to the present invention, when any of the driver's driving ability is lost or there is a sign of such loss, the vehicle performs all of the driving functions instead. Thus, safety of vehicle travel is ensured. In addition, according to the present invention, when any of the driving performance is temporarily reduced, the physical stimulation is applied to the driver, or the driver is provided with the information that makes the driver recognize the temporary reduction of the driving performance. Thus, it is possible to recover the temporarily reduced driving ability of the driver and to cause the driver himself/herself to continue driving. Furthermore, according to the present invention, when any of the driving performance is chronically reduced, the driving performance is maintained or improved by providing the driver with the information on the assistance with the exertion of the driving performance. Thus, instead of performing the function instead, the vehicle can compensate for the driver's lack of ability or can urge the driver to improve his/her ability while allowing the driver to proactively exert his or her driving performance. Therefore, it is possible to maintain or improve the driver's driving ability through driving while ensuring safe travel by automated driving.

The vehicle control apparatus may further execute insufficient function substitution processing in which, when the temporary reduction or the chronic reduction of the driving performance of any of the plural driving functions of the driver is detected, the vehicle is controlled such that the vehicle performs the driver's driving function with the driving performance instead.

According to the vehicle control apparatus as described above, even when the driver's driving ability is low, the vehicle performs the driving function associated with the insufficient driving performance instead. Thus, the safety of the vehicle travel is ensured, and the driver can extend driving life without giving up driving.

The plural driving functions of the driver may include a perceptual function to perceive the traffic environment and the travel environment, a determination function to determine a necessary driving operation in the traffic environment and the travel environment, and an operation function to perform the driving operation.

According to the vehicle control apparatus as described above, it is determined for each of the plural driving functions whether the driver has specified driving performance. In this way, it is possible to identify an insufficient function with low driving performance and to appropriately select the insufficient function, for which the optimization processing or the assistance processing should be executed.

None of the all functions substitution processing, the optimization processing and the assistance processing may be executed, when it is determined that none of the perceptual function, the determination function, and the operation function is insufficient.

In the assistance processing, information with a different content may be provided according to each of the plural driving functions of the driver.

According to the vehicle control apparatus as described above, appropriate assistance information can be provided according to a type of the insufficient function.

### [Advantage]

According to the vehicle control apparatus and the vehicle control method in the present invention, it is possible to maintain or improve the driver's driving ability while ensuring the safe travel by the automated driving.

### [Brief Description of the Drawings]

[Fig. 1] Fig. 1 is an explanatory view of vehicle control in an embodiment of the present invention.
[Fig. 2] Fig. 2 is a block diagram of a vehicle control apparatus in the embodiment of the present invention.
[Fig. 3] Fig. 3 is an explanatory view illustrating a processing procedure by the vehicle control apparatus in the embodiment of the present invention.
[Fig. 4] Fig. 4 is an explanatory view of a conventional human-machine system.
[Fig. 5] Fig. 5 is an explanatory view of a human-machine system in the embodiment of the present invention.
[Fig. 6] Fig.6 is a flowchart of driving assistance control in the embodiment of the present invention.

### [Embodiments for Carrying Out the Invention]

A description will hereinafter be made on a vehicle control apparatus and a vehicle control method according to an embodiment of the present invention with reference to the accompanying drawings. All of the features as shown in the drawings may not necessarily be essential.

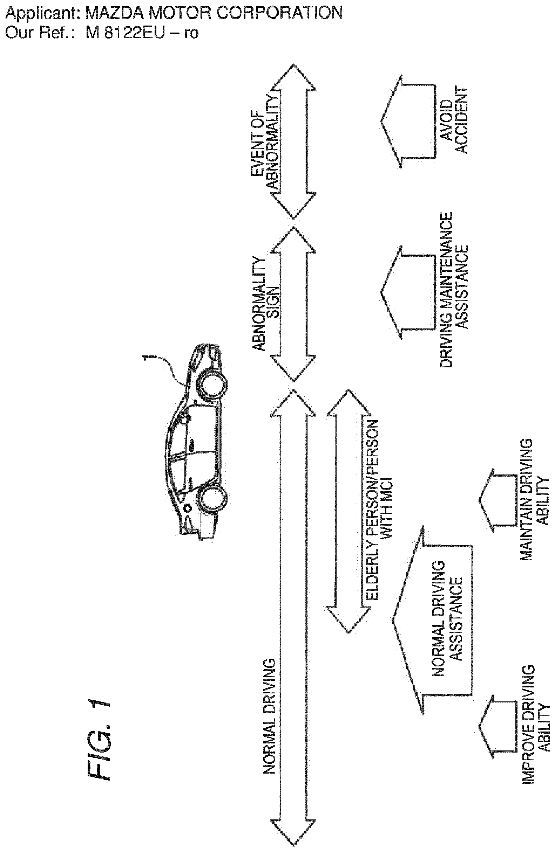

First, a description will be made on an overview of vehicle control that is provided by the vehicle control apparatus according to the embodiment of the present invention with reference to Fig. 1. Fig. 1 is an explanatory view of the vehicle control.

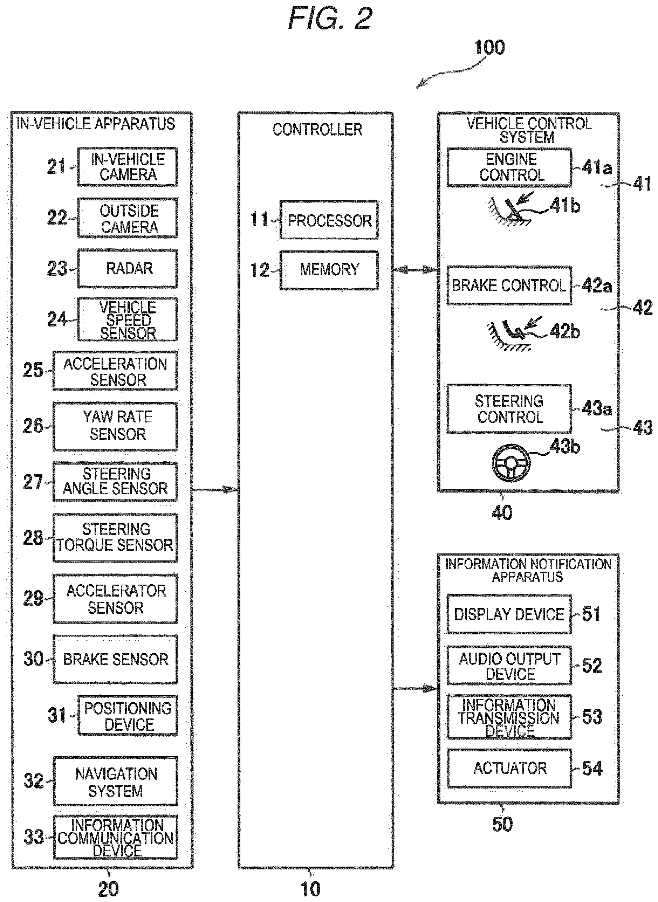

The vehicle control apparatus 100 (see Fig. 2) in this embodiment is configured on a premise that a driver proactively performs a vehicle operation of a vehicle 1. Accordingly, the vehicle control apparatus 100 assists with the vehicle operation of the vehicle 1 in an appropriate level according to the driver's condition. In other words, in this embodiment, in principle, driving assistance control of the vehicle 1 is provided to fill a gap between the vehicle operation that the driver desires to perform and the vehicle operation that the driver can perform. For example, the driver's reduced driving function is primarily assisted. Furthermore, the vehicle control apparatus 100 is configured to automatically switch the vehicle 1 to automated driving control at a specified time.

More specifically, in the case where the driver has normal driving ability, the vehicle control apparatus 100 intervenes in the vehicle operation only at a particular time to execute the driving assistance control (automatic acceleration, automatic braking, automatic steering, or the like). Examples of the particular time are a time when the driver's driving ability is temporarily reduced (for example, due to fatigue or drowsiness) and a time when travel environment is relatively difficult (for example, a surrounding traffic condition is complicated, a road shape is complicated, or surrounding environment is dark).

In some aspects, the travel environment may include a surrounding traffic condition, a road shape, a road surface friction coefficient and/or information regarding the surrounding environment.

In the case where the driving ability of the driver (for example, an elderly person or a person with MCI) is partially reduced (for example, a lack of muscle strength to operate a steering wheel), the vehicle control apparatus 100 compensates for the reduced driving ability. In addition, the vehicle control apparatus 100 executes the driving assistance control to maintain or recover the reduced driving ability or to further improve the driving ability.

Meanwhile, in the case where such an abnormality sign is detected that the driver's conscious level or driving ability is reduced rapidly or over a specified period (several minutes to several tens of minutes) (for example, at onset of an acute illness or when a drowsiness level is high), the vehicle control apparatus 100 executes the driving assistance control to maintain safe travel. In an event of abnormality in which the driver loses consciousness or driving ability, in order to avoid occurrence of an accident, the vehicle control apparatus 100 executes the automated driving control and also executes processing to notify outside of an emergency situation.

Next, a description will be made on a configuration of the vehicle control apparatus according to the embodiment of the present invention with reference to Fig. 2. Fig. 2 is a block diagram of the vehicle control apparatus. As illustrated in Fig. 2, the vehicle control apparatus 100 may have, as main components, a controller 10 such as an electronic control unit (ECU), an in-vehicle apparatus 20, a vehicle control system 40, and an information notification apparatus 50.

The in-vehicle apparatus 20 may include an in-vehicle camera 21, an outside camera 22, a radar 23, and plural vehicle behavior sensors (a vehicle speed sensor 24, an acceleration sensor 25, a yaw rate sensor 26) to detect behavior of the vehicle 1, plural operation detection sensors (a steering angle sensor 27, a steering torque sensor 28, an accelerator operation amount sensor 29, a brake depression amount sensor 30) to detect the driver's operation, a positioning device 31, a navigation system 32, and an information communication device 33.

The vehicle control system 40 may include an engine control system 41, a brake control system 42, and a steering control system 43 that respectively correspond to a running function, a stopping function, and a turning function of the vehicle. The information notification apparatus 50 may include a display device 51, an audio output device 52, an information transmission device 53, and plural actuators 54.

The controller 10 may be constructed of a computer device that includes: a processor 11; memory 12 that stores various programs executed by the processor 11 and data; an input/output device; and the like. The controller 10 is configured to output a control signal for executing the vehicle control (the driving assistance control and the automated driving control) to the vehicle control system 40 and the information notification apparatus 50 on the basis of a signal received from the in-vehicle apparatus 20.

The in-vehicle camera 21 captures an image of the driver of the vehicle 1 and outputs image information. Based on this image information, the controller 10 may determine a facial expression and an upper body posture of the driver.

The outside camera 22 captures an image around the vehicle 1 (typically, front of the vehicle 1) and outputs image information. Based on this image information, the controller 10 may identify a target object and a position thereof on the outside of the vehicle. The target objects may at least include a traffic participant and a boundary of a travel road. More specifically, the target objects include surrounding moving bodies (a vehicle, a pedestrian, and the like) and immobile structures (an obstacle, a parked vehicle, the travel road, a lane marking, a stop line, a traffic signal, a traffic sign, an intersection, and the like).

The radar 23 measures the position and a speed of the target object that exists around the vehicle 1 (typically, in front of the vehicle 1). For example, as the radar 23, a millimeter-wave radar, a laser radar (LIDAR), an ultrasonic sensor, or the like can be used.

The vehicle speed sensor 24 detects a speed (a vehicle speed) of the vehicle 1. The acceleration sensor 25 detects acceleration of the vehicle 1. The yaw rate sensor 26 detects a yaw rate generated to the vehicle 1. The steering angle sensor 27 detects a rotation angle (a steering angle) of a steering wheel 43b of the vehicle 1. The steering torque sensor 28 detects rotational torque that is associated with rotation of the steering wheel 43b. The accelerator operation amount sensor 29 detects a depression amount of an accelerator pedal 41b. The brake depression amount sensor 30 detects a depression amount of a brake pedal 42b.

The positioning device 31 may include a GPS receiver and/or a gyroscope sensor, and may detect a position of the vehicle 1 (current vehicle position information). The navigation system 32 stores map information therein and can provide the map information to the controller 10. The controller 10 can calculate an entire travel route (including a travel lane, the intersection, the traffic signal, and the like) to a destination on the basis of the map information and the current vehicle position information.

The information communication device 33 communicates with an external communication device. For example, the information communication device 33 performs inter-vehicular communication with another vehicle and road-vehicle communication with an external communication device, receives various pieces of driving information and traffic information (traffic jam information, speed limit information, and the like), and provides the information to the controller 10.

The engine control system 41 may control drive power of an engine system (an internal combustion engine, an electric motor, or the like) of the vehicle 1. The controller 10 drives the engine system by sending a control signal to an engine controller 41a on the basis of input from the accelerator pedal 41b, and can thereby accelerate or decelerate the vehicle 1.

The brake control system 42 may control drive power of a brake system of the vehicle 1. For example, the brake control system 42 includes brake actuators such as a hydraulic pump and a valve unit. The controller 10 drives the brake system by sending a control signal to a brake controller 42a on the basis of input from the brake pedal 42b, and can thereby decelerate the vehicle 1.

The steering control system 43 may control drive power of a steering system of the vehicle 1. The steering control system 43 includes an electric motor for an electric power steering system, and the like, for example. The controller 10 drives the steering system by sending a control signal to a steering controller 43a on the basis of input from the steering wheel 43b, and can thereby change an advancing direction of the vehicle 1.

The display device 51 can visually display assistance information (visual information) for assisting the driver with the vehicle operation in a display area. More specifically, the display device 51 may be a HUD. The display area corresponds to size of an entire or partial front windshield of the vehicle 1, and the assistance information is displayed in the driver's field of view. Instead of the HUD, a liquid-crystal display may be used.

The audio output device 52 may be a speaker, for example, and can provide assistance information (auditory information) for assisting the driver with the vehicle operation.

The information transmission device 53 can transmit information on driving assistance to an external information communication device (for example, the driver's mobile information terminal).

The actuators 54 may include an electric motor, a gear mechanism, and the like. The plural actuators 54 are configured to move each of plural operation sections to be operated at the time when the driver drives the vehicle 1 (for example, the accelerator pedal 41b, the brake pedal 42b, and the steering wheel 43b) in an operation direction without the driver's input. The controller 10 outputs a control signal to each of the actuators 54 and can thereby cause the corresponding operation section to demonstrate desired behavior.

The vehicle control system (for example, the engine control system, the brake control system, and the steering control system) in this embodiment may be configured to be actuated by a drive-by-wire method. In addition, the vehicle control system in this embodiment may be configured that the operation input from the operation section is transmitted as a control signal via the controller 10, and a drive unit corresponding to the operation section receives the control signal and is driven on the basis of the control signal. Thus, the controller 10 can output the control signal to the drive unit independently of movement of the operation section by the actuator 54.

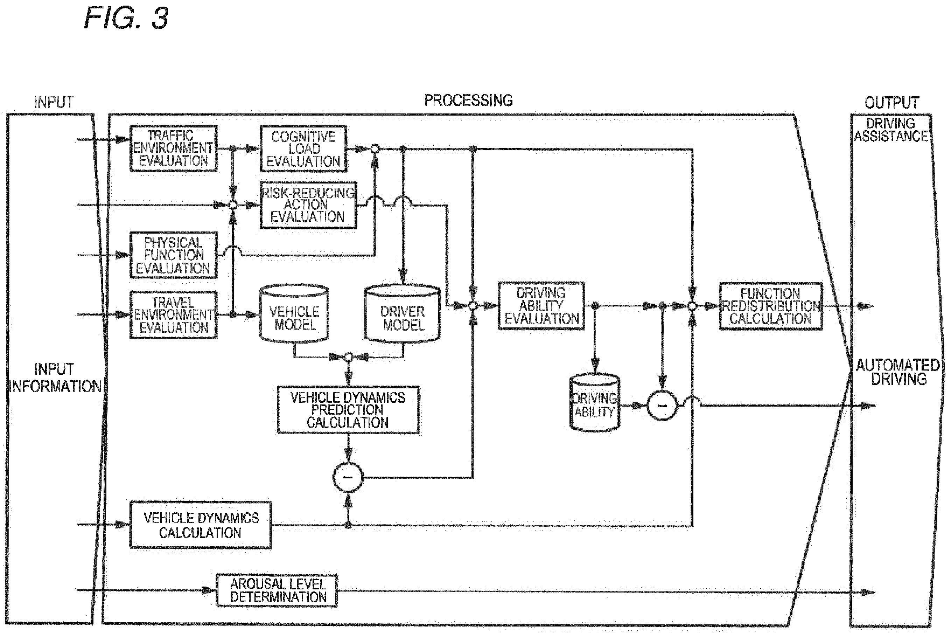

Next, a description will be made on a processing procedure by the vehicle control apparatus according to the embodiment of the present invention with reference to Fig. 3. Fig. 3 is an explanatory view illustrating the processing procedure by the vehicle control apparatus. More specifically, Fig. 3 illustrates that the controller 10 processes input information from the in-vehicle apparatus 20 to provide various types of the vehicle control (the driving assistance control and the automated driving control) by using the vehicle control system 40 and the information notification apparatus 50.

Contents of the vehicle control are an advanced driver-assistance system (ADAS), the automatic acceleration, the automatic braking, the automatic steering, automatic vehicle posture stabilization control, automated driving (level 3 or higher), and maintenance assistance processing and improvement assistance processing for the driver's driving ability. The ADAS may at least include assistance functions for following a preceding vehicle, preventing a collision with the preceding vehicle, preventing lane departure, and the like (automatic entry avoidance control). The automatic vehicle posture stabilization control is control to stabilize a posture of the vehicle 1, that is, vehicle dynamics (a pitch, a roll, and a yaw) and to prevent sideslip, overturning, and the like.

The in-vehicle apparatus 20 continuously transmits the acquired information to the controller 10. Based on the acquired information, the controller 10 may perform the following calculations or makes the following evaluations.

The controller 10 may evaluate traffic environment around the vehicle 1 on the basis of the input information from the outside camera 22, the radar 23, the positioning device 31, the navigation system 32 (the map information), and the like (traffic environment evaluation).

The traffic environment may be one or more objects around the vehicle. For example, the traffic environment may include another vehicle, the pedestrian, a border line, a guard rail, the stop line, and/or the traffic sign.

More specifically, the controller 10 may calculate the position, a speed, and the like of the target object (the vehicle, the pedestrian, a border line, a guard rail, the stop line, the traffic sign, or the like) around the vehicle 1.

In addition, the controller 10 may evaluate a physical function of the driver on the basis of information from the steering angle sensor 27, the steering torque sensor 28, the brake depression amount sensor 30, the in-vehicle camera 21, and the like (physical function evaluation). More specifically, the controller 10 may estimate levels of the driver's physical functions to operate the operation section with an appropriate operation amount and at an appropriate operation speed and to visually capture visual stimulation on the outside of the vehicle. Whether the driver operates the operation section with the appropriate operation amount and at appropriate operation speed is evaluated by a difference between a combination of the operation amount and the operation speed (the steering angle, a steering angular velocity, the depression amount, a depression speed, or a brake hydraulic pressure of the brake pedal 42b, or the like) actually input by the driver via the operation section and a combination of a target operation amount and a target operation speed at the time of traveling on a target travel route. Based on a driving request (the destination and the like), the target travel route may be calculated by using results of the traffic environment evaluation, a travel environment evaluation, the physical function evaluation, and the like such that the vehicle 1 can travel safely and efficiently.

The controller 10 may evaluate travel environment around the vehicle 1 on the basis of the information from the outside camera 22, the vehicle speed sensor 24, the acceleration sensor 25, the positioning device 31, and the like (the travel environment evaluation).

The travel environment may be one or more physical quantities that affect the vehicle dynamics. Specifically, the travel environment may include a curve radius and/or a road surface friction coefficient of the travel road.

More specifically, the controller 10 estimates physical quantities (for example, a curve radius and a road surface friction coefficient of the travel road) that affect the vehicle dynamics.

In addition, the controller 10 may calculate the current vehicle dynamics of the vehicle 1 on the basis of the information from the vehicle speed sensor 24, the acceleration sensor 25, the yaw rate sensor 26, and the like (vehicle dynamics calculation). The vehicle dynamics includes the speed, the acceleration, the yaw rate, three-axis rotational moment (pitch, yaw, and roll), and the like.

The controller 10 may determine the driver's arousal level on the basis of the image information from the in-vehicle camera 21 (arousal level determination). For example, the arousal level is evaluated by opening amounts of the driver's eyes and/or mouth and by a position or the posture of the driver's upper body. For example, the arousal level can be evaluated in four levels (zero, low, moderate, and high arousal).

The controller 10 may determine whether there is a predicted risk in the traffic environment evaluation and the travel environment evaluation. The predicted risks include a traffic risk due to the traffic environment (for example, a collision of the vehicle 1 with the other vehicle) and a travel risk due to the travel environment affecting the vehicle dynamics (for example, spinning on a curved road). Then, the controller 10 evaluates risk-reducing action taken by the driver in response to this predicted risk on the basis of the information from the in-vehicle apparatus 20, the in-vehicle camera 21, and the like (risk-reducing action evaluation).

The risks include a vehicle accident, such as the collision of the vehicle 1, and states where postural stability of the vehicle 1 is lost or reduced (spinning, overturning, and the like). Risk objects causing such a risk include the traffic participants (the other vehicle, the pedestrian, and the like), the guard rail, the border line, the traffic signal (a red light), the stop line, and the like. The risk objects may further include risk-generating portions of the travel road (a clipping point on the curved road, and the like). Each of these target objects becomes the risk object in such a circumstance where the respective object possibly poses the risk in the near future (for example, within a specified period such as 10 seconds) in the case where the current vehicle behavior (vehicle dynamics) continues. The risk-reducing action is action taken by the driver in response to the predicted risk and, in particular, the vehicle operation (the acceleration, braking, and/or steering) that is performed to reduce a probability of occurrence of the predicted risk. For example, in the case where the predicted routes of the vehicle 1 and the other vehicle intersect and the collision between these vehicles is predicted, the risk-reducing action is the vehicle operation to reduce a collision probability or the vehicle operation to set the closest distance between the vehicle 1 and the other vehicle to be equal to or longer than a specified distance. Furthermore, the object, which is unlikely to pose the risk at a current time point but should be perceived during the travel, and the object, which possibly poses the risk in the future beyond a specified period, may be included as the risk objects.

In addition, the risk-reducing action includes such action that the driver perceives the risk object (for example, the other vehicle with the collision possibility or a location near the clipping point on the curved road) before operating the operation section. For example, the risk-reducing action includes shifting of the driver's sightline to the risk object and shifting of the driver's posture to handle the risk (that is, perception of the risk object by the driver) on the basis of the image information from the in-vehicle camera 21.

The controller 10 may evaluate the driver's current cognitive load on the basis of the result of the traffic environment evaluation (cognitive load evaluation). For example, the controller 10 evaluates that, according to the vehicle speed, the driver's cognitive load is greater as the number of the target objects within a specified distance from the vehicle 1 is increased. For example, the cognitive load can be evaluated in three levels (low, moderate, and high). In addition, the controller 10 may analyze and learn the driver's cognitive ability level on the basis of information on the vehicle operation by the driver and the driver's sightline direction, and may then update the driver's cognitive ability level. In this case, the cognitive load evaluation can be calculated by a ratio of a magnitude of the current cognitive load to the driver's cognitive ability level.

The controller 10 may store a vehicle model, which defines physical motion of the vehicle 1, in a storage section. The vehicle model represents a relationship between specifications of the vehicle 1 (mass, wheelbase, and the like) and physical variations (the speed, the acceleration, the steering angle, and the like) by an equation of motion. The result of the travel environment evaluation (for example, the road surface friction coefficient) can also be applied to the vehicle model.

The controller 10 stores a driver model of the driver who drives the vehicle 1 in the storage section. The controller 10 analyzes and learns the driver's operation characteristic on the basis of the input information from the in-vehicle apparatus 20, and constantly updates the driver model. The driver model represents the driver's operation characteristic and includes an operation amount, a reaction delay time (time constant), and the like for a particular operation under a certain condition. The result of the cognitive load evaluation (the magnitude of the cognitive load) and the result of the physical function evaluation can also be applied to the driver model. For example, in a situation where the cognitive load is high, the driver model is corrected to reduce the driver's operating ability. Meanwhile, in the case where it is determined, from the result of the physical function evaluation, that a depression force or arm strength is low, such a determination is reflected to the time constant related to the operation amount and the operation speed of the operation section. By using the driver model, the controller 10 can predict the driver's operation. The controller 10 also stores an ideal driver model, which represents the driver's ideal operation characteristic with the high driving ability, in the storage section, and thus can also predict the ideal operation.

The controller 10 applies the input information from the in-vehicle apparatus 20 to the vehicle model and the driver model, and can thereby calculate the vehicle dynamics that is predicted to be generated in a period from the current time point to the near future (vehicle dynamics prediction calculation). In other words, by inputting current conditions (the traffic environment, the travel environment, the cognitive load, and the physical function) into the driver model and the vehicle model, the controller 10 can predict the vehicle operation (a type of the operation, the operation amount, operation timing, and the like) to be performed by the driver after a specified period (for example, after 10 seconds) from the current time point, and can calculate predicted vehicle dynamics to be generated by the predicted vehicle operation.

Furthermore, the controller 10 makes a driving ability evaluation. The driving ability represents a measure of the driver's ability to avoid the various risks. The controller 10 evaluates or calculates the driving ability against the risk on the basis of the result of the risk-reducing action evaluation (the risk-reducing action taken by the driver), a difference between the predicted vehicle dynamics and the actual vehicle dynamics, and the result of the cognitive load evaluation (the magnitude of the cognitive load). For example, the driving ability against the risk can be a required risk-reducing time that is required by the driver to reduce the predicted risk. The required risk-reducing time may be a time from initiation of the risk-reducing action to disappearance of the predicted risk or a required time from the driver's perception of the risk to completion of the risk-reducing action. In this case, in the case where the driving ability is evaluated as low, the required risk-reducing time is output as a large value.

For example, the controller 10 uses the driver model to calculate a predictive travel route of the vehicle 1 at a future time point in a case where it is assumed that the current vehicle behavior continues only for a specified time. When the specified time reaches a certain time, the risk can no longer be avoided in the predictive travel route at the time point. Then, a time until occurrence of the risk in the predictive travel route, which is calculated at this time, (a risk margin time) may be set as the required risk-reducing time.

The controller 10 can update driving ability data by using the calculated driving ability evaluation. The driver's driving ability changes over time. For example, the driving ability of a novice driver tends to be improved while the driving ability of the elderly person tends to be reduced. Plural driving ability data sets may be provided in a manner to correspond to plural evaluation periods. For example, the driving ability data sets in a short term (one to six months before the current time point), a medium term (three to nine months before the current time point), and a long term (one to two years before the current time point) can be created.

The controller 10 may perform a function redistribution calculation on the basis of the current vehicle dynamics, the result of the driving ability evaluation (the current driving ability), the result of the cognitive load evaluation, and the result of the physical function evaluation. The controller 10 may execute the driving assistance control and the automated driving control on the basis of this calculation. During normal driving, the driver (for example, the novice driver or the elderly person) exerts driving performance by using his/her own driving functions (a perceptual function, a determination function, and the physical function). However, in the case where the driver cannot avoid the predicted risk (that is, in the case where the driver's driving performance does not satisfy the required driving ability to avoid the predicted risk), the controller 10 may execute the driving assistance control such that the vehicle 1 performs the driving function, which is related to the insufficient driving ability, instead. Meanwhile, in the event of abnormality (for example, loss of consciousness), for example, the automated driving control is executed, and the driver's driving function is substituted with an equivalent and corresponding function of the vehicle 1.

In addition, the controller 10 may compare the result of the driving ability evaluation (the current driving ability against the predicted risk) to the driving ability data. Then, in the case where the current driving ability is lower than the driving ability in the past, the controller 10 provides assistance (including the automated driving) to compensate for the reduced driving ability. When the driver's arousal level is moderate (for example, the mild drowsiness), the controller 10 executes processing to wake the driver (for example, blowing cool air to the driver) . When the driver's arousal level is low (for example, the severe drowsiness or the loss of consciousness), the controller 10 executes the automated driving.

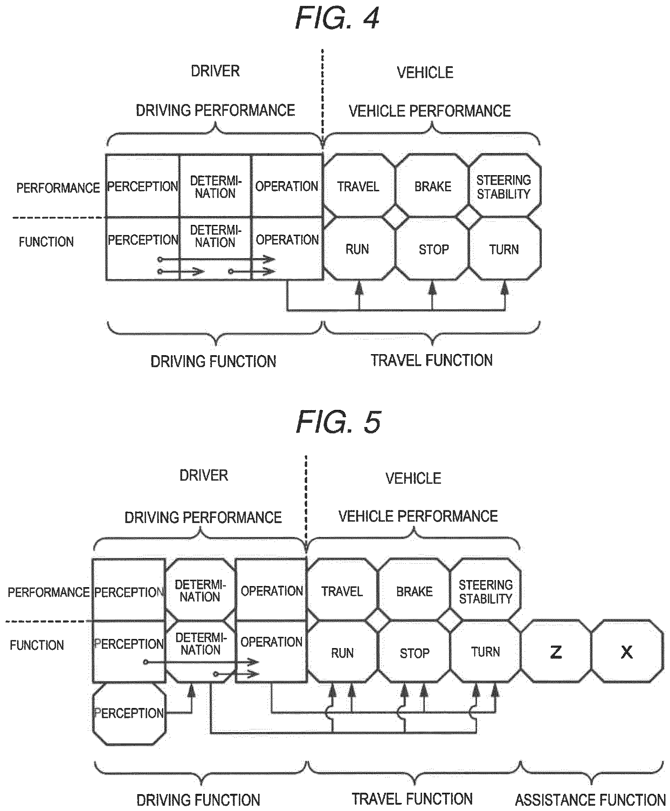

Next, a description will be made on a human-machine system configured to include the driver and the vehicle in the embodiment of the present invention. Fig. 4 is an explanatory view of a conventional human-machine system, and Fig. 5 is an explanatory view of the human-machine system in this embodiment.

As illustrated in Fig. 4, the driver (a human) at least has the perceptual function, the determination function, and an operation function (or the physical function) in relation to driving of the vehicle, and exerts perceptual performance, determination performance, and operational performance (or motion performance) by using these driving functions. The driver captures the object by using the perceptual function (the perceptual performance), selects or determines the vehicle operation to be performed for the captured object by using the determination function (the determination performance), and performs the selected vehicle operation with the appropriate operation amount and at the appropriate timing by using the operation function (the operational performance). Meanwhile, the vehicle at least has the running function, the stopping function, and the turning function. When these travel functions are used for the driver's vehicle operation, the vehicle exerts travel performance, braking performance, and steering stability performance to travel.

Just as described, when the driver exerts the perceptual performance, the determination performance, and the operational performance to operate the vehicle, the vehicle exerts the travel performance, the braking performance, and the steering stability performance. In this way, the vehicle as the human-machine system can travel safely. Conventionally, in order to efficiently exert three types of the performance of the vehicle, the vehicle is provided with an interface that mediates between the driver's function and the vehicle function. In this way, overall vehicle performance (for example, braking ability, fuel economy, and the like) is improved.

During the automated driving, the vehicle substitutes for all or most of the perceptual function, the determination function, and the physical function of the driver. For example, the in-vehicle camera, the acceleration sensor, the radar, and the like substitute for the perceptual function. The computer in the vehicle substitutes for the determination function. The in-vehicle actuator substitutes for the physical function. The driver only needs to have the physical function to give a minimum instruction such as an engine start in an exceptional case, and needs not have most of the driving function and the driving ability (the driving performance).

Fig. 5 illustrates an example of the human-machine system in this embodiment. In this embodiment, driving function substitution processing and driving performance assistance processing (maintenance assistance and improvement assistance) are executed. At least one type of the driving performance (perceptional, determination, and operational) related to the driving functions (perceptual, determination, and operation) is in the low level for the driver with the low driving ability (for example, the novice driver or the elderly person). The driving performance of the driver with average driving ability (a normal driver) can also be in the relatively low level.

In this embodiment, in the case where the driver's driving ability is low at the time of detecting the predicted risk (or at the time of encountering the risk), the vehicle control apparatus 100 executes the driving function substitution processing to substitute the driving function related to the low driving ability of the driver (an insufficient function) with the corresponding function of the vehicle 1. In this processing, the vehicle control apparatus 100 detects, of the driver's driving functions, the driving function (perceptual, determination, or operation) with low performance, and intervenes in the vehicle operation such that the vehicle 1 only assists this low driving function (the insufficient function). In this way, even when the driver's driving ability is partially reduced, the travel function of the human-machine system, which is configured to include the driver and the vehicle 1, is maintained. In Fig. 5, as an example, the determination function and the determination performance of the driver are substituted with the equivalent function and the equivalent performance of the vehicle 1.

In addition, in this embodiment, when executing the driving function substitution processing, the vehicle control apparatus 100 executes the driving performance assistance processing to maintain or recover the driving ability of the insufficient function. Fig. 5 illustrates a Z function for executing this assistance processing. By this processing, the driver is urged to take action to maintain or recover the driving ability in a specified time for the insufficient function among the driver's driving functions (perceptual, determination, and operation). In the case where the driver's driving ability is recovered to such a level in which the predicted risk can be avoided, the driving function substitution processing and the driving performance assistance processing are no longer executed.

In this embodiment, during a normal time when no predicted risk is detected, the vehicle control apparatus 100 executes the driving performance assistance processing to improve the driver's driving performance. Fig. 5 illustrates an X function for executing this assistance processing. In this processing, the driver is urged to improve his or her driving ability in a specified time for at least the insufficient function among the driver's driving functions. Fig. 5 illustrates, as an example, a case where the driver's operational performance is lower than a required level.

The driving performance assistance processing for improving the driver's driving performance is processing to provide the driver with advice on driving action that the driver should perform so as to raise the driver's driving ability to a higher level of the driving ability. For example, a recommended vehicle operation by an experienced driver with the high driving ability is taught to the driver. This corresponds to that the driver leans a driving technique from the experienced driver. With this assistance processing, the driver learns a model vehicle operation for the poor function among the perceptual function, the determination function, and the operation function, and can thereby improve his/her driving ability.

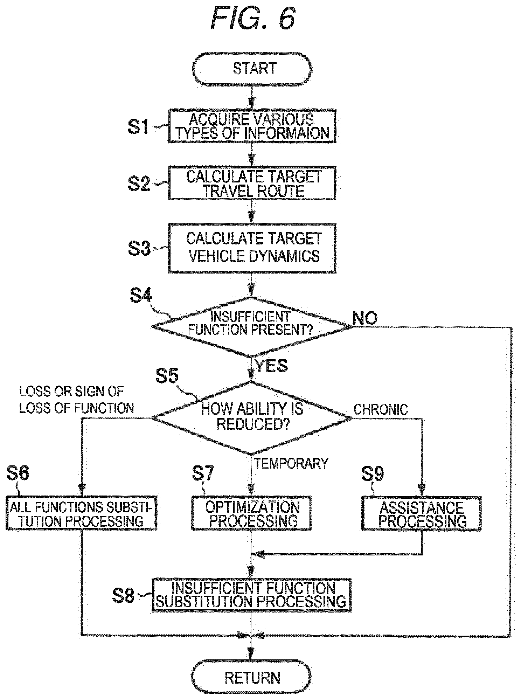

Next, a description will be made on a processing flow of the driving assistance control by the vehicle control apparatus according to the embodiment of the present invention. Fig. 6 is a flowchart of the driving assistance control. After receiving the driving request (the destination and the like) from the driver or the outside via an input device (for example, the navigation system 32 or the information communication device 33), the controller 10 repeatedly executes the driving assistance control (for example, every 0.1 second).

First, as illustrated in Fig. 6, the controller 10 may acquire the information from the in-vehicle apparatus 20 every specified time (for example, every 0.1 second) (S1). Based on the acquired information, the controller 10 may execute the processing such as the traffic environment evaluation, the travel environment evaluation, the physical function evaluation, the risk-reducing action evaluation, and the vehicle dynamics calculation.

Then, the controller 10 calculates the target travel route on the basis of the acquired information and the driving request (S2). The target travel route includes: a target travel path (positional information at plural positions) in a specified period (for example, 10 seconds) from the current time point; the speed at each position on the path; and the like. By using the driving request and the results of the traffic environment evaluation, the travel environment evaluation, the physical function evaluation, and the like, the controller 10 calculates the target travel route with specified levels of safety and travel efficiency. The controller 10 can calculate plural target travel routes, each of which satisfies a specified constraint condition (for example, that lateral acceleration is equal to or lower than a specified value). For example, in the case where the obstacle exists ahead of the vehicle 1, the controller 10 can set the plural target travel routes to avoid the obstacle. Here, even when the vehicle 1 moves away from the target travel route, the vehicle 1 can travel on another travel route. However, since the other travel route does not satisfy a specified standard, the travel efficiency and ride comfort thereon are poor.

Then, the controller 10 calculates target vehicle dynamics for travel on the target travel route (S3). The target vehicle dynamics includes the speed, the acceleration, the yaw rate, the three-axis rotational moment (pitch, yaw, and roll), and the like at each of the positions on the target travel route. The target vehicle dynamics is a target control value that is used when the vehicle 1 executes the driving assistance control and the automated driving control. Plural types of the target vehicle dynamics (or the plural target control values) can be set in a manner to correspond to the plural target travel routes.

Furthermore, the controller 10 calculates an operation amount of a target vehicle operation (the accelerator operation amount, a brake depression amount, the steering angle, or the like) that is a driving performance request for the driver and the vehicle 1 in order to achieve a physical quantity of the target vehicle dynamics at each of the positions on the target travel route, or calculates the control signal for the vehicle control system 40 (human-machine performance request setting processing). The driving performance request with a specified range is set due to the plural target travel routes.

Next, the controller 10 determines whether the insufficient function exists among the driver's driving functions (S4). More specifically, the controller 10 determines whether each of the driving functions (the perceptual function, the determination function, and the operation function) exerts the driving performance necessary to avoid the predicted risk.

For example, based on the traffic environment evaluation, the travel environment evaluation, and the like, the controller 10 predicts the risk, which occurs within a specified time, from the current vehicle behavior (vehicle dynamics). The controller 10 calculates a time from the current time point to the occurrence of the predicted risk (the traffic risk or the travel risk) (that is, a risk margin time TTR (time to risk)). The risk margin time TTR is an expected time until the vehicle 1 enters a risk area in the case where the vehicle 1 maintains the current vehicle behavior (the vehicle dynamics such as the speed and the acceleration). The entry to the risk area means the collision of the vehicle 1 with the other vehicle or a position, at which spinning of the vehicle 1 is predicted, in the curved road, for example.

In regard to the perceptual function, based on the result of the risk-reducing action evaluation, the controller 10 determines whether the risk object is perceived (for example, whether the driver moves his/her sightline to the risk object, or whether the driver tilts his/her head or upper body in response to the lateral G) by specified time (for example, by a specified time before predicted occurrence time of the predicted risk, or by the time when the vehicle 1 moves away from any of the target travel routes). In the case where the driver does not perceive the risk object by the specified time, the controller 10 identifies the perceptual function as the insufficient function.

In regard to the determination function, based on the result of the risk-reducing action evaluation, the controller 10 determines whether the driver has made an appropriate determination to reduce the risk and initiated recommended risk-reducing action by the above specified time. The recommended risk-reducing action is the target vehicle operation (for example, an accelerator, brake, or steering operation) for the target vehicle dynamics. Once the target vehicle dynamics is achieved, the risk is avoided. For example, in the case where the brake operation is required to avoid a collision with the obstacle in front, the controller 10 determines whether the brake operation has been initiated on the basis of the information from the brake depression amount sensor 30. Meanwhile, in the case where the steering operation is required to avoid the collision with the obstacle in front, the controller 10 determines whether the steering operation has been initiated on the basis of the information from the steering angle sensor 27. In the case where the driver has not initiated the recommended risk-reducing action by the specified time, the controller 10 identifies the determination function as the insufficient function.

In regard to the operation function, the controller 10 determines whether the driver has appropriately executed the vehicle operation for the risk-reducing action (mainly, whether a vehicle operation amount is appropriate) so as to reduce the probability of occurrence of the predicted risk to zero. Accordingly, the controller 10 calculates the probability of occurrence of the predicted risk by using the vehicle model in consideration of a change in the vehicle dynamics caused by the risk-reducing action in addition to the current vehicle dynamics. In the case where the driver does not appropriately perform the vehicle operation for the risk-reducing action, the controller 10 identifies the operation function as the insufficient function.

If the insufficient function does not exist (S4: NO), the probability of occurrence of the predicted risk becomes zero within the specified time, and thus the controller 10 terminates the processing.

On the other hand, if the insufficient function exists (S4: YES), the controller 10 determines, in regard to the insufficient function, how the driver's driving ability is reduced (S5). More specifically, the controller 10 determines (1) whether any of the driver's driving functions has been lost or there is a sign of loss of any of the driver's driving functions (LOSS OR SIGN OF LOSS OF FUNCTION), (2) whether the driving performance of any of the driver's driving functions has temporarily been reduced (TEMPORARY), or (3) whether the driving performance of any of the driver's driving functions has chronically been reduced (CHRONIC).

The controller 10 determines that any of the driving functions has been lost when the driver's arousal level is low or in the event of abnormality in which the driving ability is lost (for example, severe drowsiness or the loss of consciousness). Meanwhile, the controller 10 determines that there is a sign of loss of any of the driving functions in the case where such an abnormality sign is detected that the driving ability is reduced rapidly or over a predetermined period (several minutes to several tens of minutes) (for example, at the onset of the acute illness or when the drowsiness level is high) (S5: LOSS OR SIGN OF LOSS OF FUNCTION).

In this case, the controller 10 controls the vehicle 1 by the vehicle control system 40 such that the vehicle 1 performs all of the plural driving functions instead (S6: ALL FUNCTIONS SUBSTITUTION PROCESSING). In other words, the automated driving control is executed. Thereafter, the controller 10 terminates the processing.

The controller 10 determines that the driving performance of any of the driving functions has temporarily been reduced when the driver's arousal level is moderate (for example, when the driver's fatigue or mild drowsiness is detected) (S 5: TEMPORARY).

In this case, the controller 10 controls the vehicle 1 to eliminate a temporary reduction of the driving performance by applying physical stimulation to the driver or providing the driver with information that makes the driver recognize the temporary reduction of the driving performance (S7: OPTIMIZATION PROCESSING). For example, the controller 10 attempts to recover the arousal level by providing the driver with visual, auditory, or tactile noise which has an effective frequency band (15 to 20 kHz) for maintaining arousal but of which the driver is not conscious or by blowing cool air to the driver.

Alternatively, the controller 10 may use the display device 51 to highlight the risk object in the display area, may use the audio output device 52 to notify of appearance of the risk object by voice (such as "An obstacle is present ahead.", or the like). When the driver is urged by such notification and perceives the risk object, a temporary reduction of the driver's perceptual performance can be eliminated.

Further alternatively, the controller 10 may use the information notification apparatus 50 to notify the driver of appropriate determination action to be performed in order to travel on the target travel route. In this way, the driver can acknowledge an appropriate driving determination, and at least a temporary reduction of the determination performance can be eliminated. More specifically, the controller 10 displays driving operation assistance information by the display device 51, or informs the driving operation assistance information by voice using the audio output device 52. The driving operation assistance information includes contents and order of the target vehicle operations to be performed by the driver in response to the risk.

Further alternatively, the controller 10 may use the information notification apparatus 50 to notify the driver of the appropriate operation amount and appropriate operation timing for the travel on the target travel route by the movement of the operation section. In this way, the driver learns the appropriate operation, and at least a temporary reduction of the operational performance can be eliminated. More specifically, the controller 10 uses the actuator 54 to move the operation section (for example, the brake pedal 42b or the steering wheel 43b) for the intervened vehicle control to an operating position that corresponds to the appropriate operation amount.

Furthermore, the controller 10 may control the vehicle 1 by the vehicle control system 40 such that the vehicle 1 performs the driving function with the temporarily reduced driving performance instead (S8: INSUFFICIENT FUNCTION SUBSTITUTION PROCESSING).

More specifically, in the case where the perceptual performance is temporarily reduced, the controller 10 sets the detected risk object as a tracking object and executes tracking control.

Meanwhile, in the case where the determination performance is temporarily reduced, the controller 10 executes the vehicle control to disable the vehicle operation by the driver or override the vehicle operation by the driver with another vehicle operation so as to avoid the risk. In the drive-by-wire vehicle 1, even when the driver operates the operation section, due to disablement of the vehicle operation, the control signal is no longer generated on the basis of the operation of the operation section. For example, in the case where the obstacle in front is avoided, it is assumed that the driver performs the steering operation to drive by a side of the obstacle. Meanwhile, since an oncoming vehicle is approaching, the target vehicle operation is deceleration by the brake operation (that is, the target travel route is set to a route on which the vehicle 1 is decelerated before reaching the obstacle). In this situation, the controller 10 disables the steering operation, and outputs the control signal to the brake controller 42a so as to stop the vehicle 1 before reaching the obstacle. On the contrary, in the case where the target vehicle operation is the steering operation but the driver performs the brake operation, the controller 10 disables the brake operation, and outputs the control signal to the steering controller 43a so as to avoid the obstacle.

In the case where the performance of the operation function is temporarily reduced, the controller 10 executes the vehicle control for avoiding the risk. For example, in the case where the driver depresses the brake pedal 42b to avoid the collision with the obstacle but the depression amount is insufficient due to the small depression force by the driver, the controller 10 outputs the control signal corresponding to the appropriate operation amount to the brake controller 42a such that the vehicle 1 stops before reaching the obstacle. Meanwhile, in the case where the driver operates the steering wheel 43b to avoid the collision with the obstacle but the operation amount thereof is insufficient due to the low arm strength of the driver, in order to secure a clearance from the obstacle, the controller 10 outputs the control signal corresponding to the appropriate operation amount to the steering controller 43a. After the insufficient function substitution processing, the controller 10 terminates the processing.

In the case where the result of the driving ability evaluation (the current driving ability against the predicted risk) is compared to the driving ability data and the current driving ability is lower than the driving ability in the past, the controller 10 determines that the driving performance of any of the driver's driving functions is chronically reduced (S5: CHRONIC).

In this case, the controller 10 controls the vehicle 1 to provide the driver with information on assistance with exertion of the driving performance so as to maintain or improve the driving performance (S9: ASSISTANCE PROCESSING).

The controller 10 may be configured to control the information notification apparatus 50 to notify the driver. Specifically, the controller 10 may be configured to control the information notification apparatus 50 to notify the driver so that the driver learns perceptual action, e.g., a perceived object and timing.

More specifically, in the case where the perceptual performance is chronically reduced, in order to bring the driver's driving performance (perceptual performance) close to a level in which the vehicle 1 can travel on the target travel route, the controller 10 may use the information notification apparatus 50 to notify the driver of an exertion mode of the perceptual function by the experienced driver with the high driving ability to travel on the target travel route. In this way, the driver may learn model perceptual action (a perceived object, timing, and the like) of the experienced driver, and can thereby improve the perceptual performance. In this embodiment, the vehicle operation includes the perceptual action.

For example, in the case where the driver does not perceive a target to be perceived when making a right turn, the controller 10 visually highlights the target to be perceived in the display area of the display device 51. Alternatively, the controller 10 may notify of the target to be perceived by using the audio output device 52.

In the case where the driver does not perceive overspeeding, the controller 10 limits the driver's viewable range in front of the vehicle to a narrower range. In this case, the display device 51 darkens (or reduces transparency of) a portion of the display area that corresponds to a peripheral portion of the front windshield and thereby narrows the range where the driver can see the outside through the front windshield. As a result, the driver feels a fast moving speed of outside scenery within the narrow viewable range. Thus, the driver can easily notice overspeeding of the vehicle 1. The controller 10 may notify of an overspeed state of the vehicle 1 by using the display device 51 or the audio output device 52.

In the case where the driver does not perceive external G, the controller 10 uses the display device 51 or the audio output device 52 to notify the driver that the external G is applied to the vehicle 1 and also to notify the posture to be assumed by the driver.

In the case where the determination performance is chronically reduced, in order to bring the driver's driving performance (determination performance) close to the level in which the vehicle 1 can travel on the target travel route, the controller 10 uses the information notification apparatus 50 to notify the driver of an exertion mode of the determination function by the experienced driver with the high driving ability to travel on the target travel route. In this way, the driver learns model determination action of the experienced driver to travel on the target travel route, and can thereby improve the determination performance.

For example, in the case where the driver once operates the steering wheel in a left turning direction and thereafter operates the steering wheel in a right turning direction when making the right turn, the controller 10 uses the information notification apparatus 50 to notify the driver of the driving operation assistance information after termination of driving. In this case, the driving operation assistance information includes information on the vehicle operation that is performed by the driver when making the right turn (a left turning operation) and information on the target vehicle operation to be performed by the driver when making the right turn.

For example, in the case where initiation timing of the brake operation or the steering operation by the driver is late on the curved road, the driving operation assistance information includes information on the vehicle operation by the driver on the curved road and information on the target vehicle operation to be performed by the driver on the curved road.

The driver may be notified of the driving operation assistance information during the travel of the vehicle 1. However, due to such a possibility that the driver who is notified of the assistance information gets confused, in this embodiment, the driver is notified of the assistance information of the determination function after the termination of driving.

In the case where the operational performance is chronically reduced, in order to bring the driver's driving performance (operational performance) close to the level in which the vehicle 1 can travel on the target travel route, the controller 10 uses the information notification apparatus 50 to notify the driver of the appropriate operation amount and the appropriate operation speed of the operation section to travel on the target travel route. In this way, the driver learns model operation action (the operation amount, the operation speed, and the like) of the experienced driver, and can thereby improve the operational performance.

For example, in the case where the driver rotates the steering wheel 43b to the right when making the right turn, but a rotational operation amount is small due to the low arm strength of the driver, and the actual travel route is shifted away from the target travel route, the controller 10 can use the display device 51 and/or the audio output device 52 to notify the driver that a rotational operation speed of the steering wheel 43b is low and to notify the driver of the actual operation amount, the target operation amount, visual expression of the actual route and the target travel route, and the like.

For example, in the case where the driver depresses the brake pedal 42b on the curved road, but the depression speed is low due to the small depression force of the driver, and the actual travel route is located on an outer side of the target travel route, the controller 10 can use the display device 51 and/or the audio output device 52 to notify the driver that the depression speed of the brake pedal 42b is low and to notify the driver of the actual operation speed, the target operation speed, the visual expression of the actual route and the target travel route, and the like.

After the assistance processing in step S9, the controller 10 controls the vehicle 1 by the vehicle control system 40 such that the vehicle 1 performs the driving function with the chronically reduced driving performance instead (S8: INSUFFICIENT FUNCTION SUBSTITUTION PROCESSING). After the insufficient function substitution processing, the controller 10 terminates the processing.

The description has been made so far on the embodiment of the present invention. However, the specific configuration and means in the present invention can be modified and improved within the scope of the technical idea of each invention described in the claims. A description will hereinafter be made on such modified examples.

Firstly, the problem to be solved by the invention and the effects of the invention are not limited to those described above. The present invention can solve problems not described above and can exert effects not described above. In addition, the present invention may solve only a part of the problem described above or exert some of the effects described above.

The above-described optimization processing, substitution processing, and assistance processing merely constitute one example. According to each of the driving functions, various types of the optimization processing to eliminate the temporary reduction of the driving performance of the function, various types of the substitution processing in which the vehicle performs the function instead, and various types of the assistance processing to maintain or improve the driving performance of the function can be adopted.

Lastly, a description will be made on operational effects of the vehicle control apparatus 100 according to this embodiment and the modified examples of this embodiment.

The vehicle control apparatus 100 in this embodiment executes the driving assistance control for the vehicle 1 such that the vehicle 1 travels according to the traffic environment and the travel environment around the vehicle 1. The vehicle 1 travels by using the plural travel functions, which are the running function, the stopping function, and the turning function, by the vehicle operation using the driver's plural driving functions. The vehicle control apparatus 100 is configured to execute: the all functions substitution processing (S6) in which, when the loss or the sign of the loss of any of the plural driving functions of the driver is detected, the vehicle 1 is controlled such that the vehicle 1 performs all of the plural driving functions instead; the optimization processing (S7) in which, when the temporary reduction of the driving performance of any of the plural driving functions of the driver is detected, the vehicle 1 is controlled to eliminate the temporary reduction of the driving performance by applying the physical stimulation to the driver or by providing the driver with the information that makes the driver recognize the temporary reduction of the driving performance; and the assistance processing (S9) in which, when the chronic reduction of the driving performance of any of the plural driving functions of the driver is detected, the vehicle 1 is controlled to maintain or improve the driving performance by providing the driver with the information on the assistance with the exertion of the driving performance.

Just as described, in this embodiment, when any of the driver's driving ability is lost or there is the sign of such loss, the vehicle 1 performs all of the driving functions instead. Thus, the safety of the vehicle travel is ensured. In addition, in this embodiment, in the case where any of the driving performance is temporarily reduced, the physical stimulation is applied to the driver, or the driver is provided with the information that makes the driver recognize the temporary reduction of the driving performance. Thus, it is possible to recover the temporarily reduced driving ability of the driver and to cause the driver himself/herself to continue driving. Furthermore, in this embodiment, in the case where any of the driving performance is chronically reduced, the driving performance is maintained or improved by providing the driver with the information on the assistance with the exertion of the driving performance. Thus, instead of performing the function instead, the vehicle 1 can compensate for the driver's lack of ability or can urge the driver to improve his/her ability while allowing the driver to proactively exert his or her driving performance. Therefore, it is possible to maintain or improve the driver's driving ability through driving while ensuring the safe travel by the automated driving.

In this embodiment, the vehicle control apparatus 100 further executes the insufficient function substitution processing (S8) in which, when the temporary reduction or the chronic reduction of the driving performance of any of the plural driving functions of the driver is detected, the vehicle 1 is controlled such that the vehicle 1 performs the driver's driving function with the driving performance instead. Just as described, in this embodiment, even when the driver's driving ability is low, the vehicle 1 performs the driving function associated with the insufficient driving performance instead. Thus, in this embodiment, the safety of the vehicle travel is ensured, and the driver can extend driving life without giving up driving.

In this embodiment, the plural driving functions of the driver include the perceptual function to perceive the traffic environment and the travel environment, the determination function to determine the necessary driving operation in the traffic environment and the travel environment, and the operation function to perform the driving operation. In this embodiment that is configured as described above, in the driving performance determination processing, it is determined for each of the plural driving functions whether the driver has the specified driving performance. In this way, in this embodiment, it is possible to identify the insufficient function with the low driving performance and to appropriately select the insufficient function, for which the optimization processing or the assistance processing should be executed.

In this embodiment, in the assistance processing, the information with the different content is provided according to each of the plural driving functions of the driver. In this embodiment that is configured as described above, the appropriate assistance information can be provided according to the type of the insufficient function.

### [Description of Reference Signs and Numerals]

1 Vehicle
10 Controller
20 In-vehicle apparatus
40 Vehicle control system
50 Information notification apparatus
100 Vehicle control apparatus

## Claims

1. A vehicle control apparatus (100) configured to execute driving assistance control for a vehicle (1) such that the vehicle (1) travels according to traffic environment and travel environment around the vehicle (1), the vehicle (1) being configured to travel by using plural travel functions, which include a running function, a stopping function, and a turning function, by a vehicle operation using plural driving functions of a driver, the vehicle control apparatus (100) being configured to execute:
all functions substitution processing in which, when loss or a sign of loss of any of the plural driving functions of the driver is detected, the vehicle (1) is controlled such that the vehicle (1) performs all of the plural driving functions instead;
optimization processing in which, when a temporary reduction of driving performance of any of the plural driving functions of the driver is detected, the vehicle (1) is controlled to eliminate the temporary reduction of the driving performance by applying physical stimulation to the driver or by providing the driver with information that makes the driver recognize the temporary reduction of the driving performance; and
assistance processing in which, when a chronic reduction of the driving performance of any of the plural driving functions of the driver is detected, the vehicle (1) is controlled to maintain or improve the driving performance by providing the driver with information on assistance with exertion of the driving performance,
wherein
the vehicle control apparatus (100) is configured to determine that any of the driving functions is lost or to be lost when the driver's loss of consciousness is detected,
the vehicle control apparatus (100) is configured to determine that the driving performance of any of the driving functions is temporarily reduced when driver's fatigue or drowsiness is detected, and
the vehicle control apparatus (100) is configured to determine that the driving performance of any of the driver's driving functions is chronically reduced when it is determined, based on driving ability data, that current driving ability of the driver is lower than past driving ability of the driver.

2. The vehicle control apparatus (100) according to claim 1 further configured to execute:
insufficient function substitution processing in which, when the temporary reduction or the chronic reduction of the driving performance of any of the plural driving functions of the driver is detected, the vehicle (1) is controlled such that the vehicle (1) performs any of the driving functions by a vehicle control system (40) instead.

3. The vehicle control apparatus (100) according to claim 1 or 2, wherein
the plural driving functions of the driver include at least one of a perceptual function to perceive the traffic environment and the travel environment, a determination function to determine a necessary driving operation in the traffic environment and the travel environment, and an operation function to perform the driving operation.

4. The vehicle control apparatus (100) according to claim 3, wherein vehicle control apparatus (100) is configured to identify the perceptual function as an insufficient function, based on whether the driver moves a sightline, a head and/or an upper body.

5. The vehicle control apparatus (100) according to claim 3 or 4, wherein vehicle control apparatus (100) is configured to identify the determination function as an insufficient function, based on whether the driver performs or initiates a brake operation and/or a steering operation.

6. The vehicle control apparatus (100) according to any one of claims 3 to 5, wherein vehicle control apparatus (100) is configured to identify the operation function as an insufficient function, based on whether an operation amount performed by the driver is enough to prevent a collision or a slip of the vehicle (1).

7. The vehicle control apparatus (100) according to any one of the preceding claims, wherein
in the assistance processing, information with a different content is provided according to each of the plural driving functions of the driver.

8. The vehicle control apparatus (100) according to any one of the preceding claims, wherein the vehicle control apparatus (100) is configured to execute none of the all functions substitution processing, the optimization processing and the assistance processing, when no insufficient driving function of the driver is detected.

9. The vehicle control apparatus (100) according to any one of the preceding claims, further comprising:
an engine control system (41) corresponding to the running function;
a brake control system (42) corresponding to the stopping function; and
a steering control system (43) corresponding to the turning function.

10. The vehicle control apparatus (100) according to any one of the preceding claims, wherein the vehicle control apparatus (100) is configured to predict a risk of a collision and/or spinning based on the traffic environment and the travel environment so as to be used to determine whether any of the driving functions is lost or to be lost, and/or whether the driving ability of any of the driving functions is reduced.

11. A vehicle (1) comprising the vehicle control apparatus (100) according to any one of the preceding claims.

12. A vehicle control method for executing driving assistance control for a vehicle (1) such that the vehicle (1) travels according to traffic environment and travel environment around the vehicle (1), the vehicle (1) being configured to travel by using plural travel functions, which include a running function, a stopping function, and a turning function, by a vehicle operation using plural driving functions of a driver, the vehicle control method comprising:
an all functions substitution step in which, when loss or a sign of loss of any of the plural driving functions of the driver is detected, the vehicle (1) is controlled such that the vehicle (1) performs all of the plural driving functions instead;
an optimization step in which, when a temporary reduction of driving performance of any of the plural driving functions of the driver is detected, the vehicle (1) is controlled to eliminate the temporary reduction of the driving performance by applying physical stimulation to the driver or by providing the driver with information that makes the driver recognize the temporary reduction of the driving performance; and
an assistance step in which, when a chronic reduction of the driving performance of any of the plural driving functions of the driver is detected, the vehicle (1) is controlled to maintain or improve the driving performance by providing the driver with information on assistance with exertion of the driving performance,
wherein
it is determined that any of the driving functions is lost or to be lost when the driver's loss of consciousness is detected,
it is determined that the driving performance of any of the driving functions is temporarily reduced when driver's fatigue or drowsiness is detected, and
it is determined that the driving performance of any of the driver's driving functions is chronically reduced when it is determined, based on driving ability data, that current driving ability of the driver is lower than past driving ability of the driver.

## Patentansprüche

1. Fahrzeugsteuerungs- bzw. -regelungsvorrichtung (100), die konfiguriert ist, eine Fahrassistenzsteuerung bzw. -regelung für ein Fahrzeug (1) auszuführen, so dass das Fahrzeug (1) entsprechend der Verkehrsumgebung und der Fahrumgebung um das Fahrzeug (1) herum fährt, wobei das Fahrzeug (1) konfiguriert ist, unter Verwendung mehrerer Fahrfunktionen, die eine Lauf- bzw. Fahrfunktion, eine Stoppfunktion und eine Wende- bzw. Abbiegefunktion beinhalten, durch einen Fahrzeugbetrieb unter Verwendung mehrerer Fahrfunktionen eines Fahrers zu fahren, wobei die Fahrzeugsteuerungs- bzw. - regelungsvorrichtung (100) konfiguriert ist, auszuführen:
eine Substitutionsverarbeitung für alle Funktionen, bei der, wenn ein Verlust oder ein Anzeichen eines Verlusts einer der mehreren Fahrfunktionen des Fahrers detektiert wird, das Fahrzeug (1) so gesteuert bzw. geregelt wird, dass das Fahrzeug (1) stattdessen alle der mehreren Fahrfunktionen durchführt;
eine Optimierungsverarbeitung, bei der, wenn eine temporäre Verringerung der Fahrleistung einer der mehreren Fahrfunktionen des Fahrers detektiert wird, das Fahrzeug (1) dahingehend gesteuert bzw. geregelt wird, die temporäre Verringerung der Fahrleistung zu beseitigen, indem dem Fahrer eine physische Stimulation zugeführt wird oder indem dem Fahrer Informationen bereitgestellt werden, die den Fahrer die temporäre Verringerung der Fahrleistung erkennen lassen; und
eine Unterstützungsverarbeitung, bei der, wenn eine chronische Verringerung der Fahrleistung einer der mehreren Fahrfunktionen des Fahrers detektiert wird, das Fahrzeug (1) dahingehend gesteuert bzw. geregelt wird, die Fahrleistung aufrechtzuerhalten oder zu verbessern, indem dem Fahrer Informationen zur Unterstützung bei der Ausübung der Fahrleistung bereitgestellt werden, wobei
die Fahrzeugsteuerungs- bzw. -regelungsvorrichtung (100) konfiguriert ist, zu bestimmen, dass eine der Fahrfunktionen verloren gegangen ist oder verloren gehen wird, wenn der Bewusstseinsverlust des Fahrers detektiert wird,
die Fahrzeugsteuerungs- bzw. -regelungsvorrichtung (100) konfiguriert ist, zu bestimmen, dass die Fahrleistung einer der Fahrfunktionen temporär verringert ist, wenn Müdigkeit oder Schläfrigkeit des Fahrers detektiert wird, und
die Fahrzeugsteuerungs- bzw. -regelungsvorrichtung (100) konfiguriert ist, zu bestimmen, dass die Fahrleistung einer der Fahrfunktionen des Fahrers chronisch verringert ist, wenn basierend auf Fahrfähigkeitsdaten bestimmt wird, dass die gegenwärtige Fahrfähigkeit des Fahrers geringer ist als die frühere Fahrfähigkeit des Fahrers.

2. Fahrzeugsteuerungs- bzw. -regelungsvorrichtung (100) nach Anspruch 1, das ferner konfiguriert ist zum auszuführen:
einer Substitutionsverarbeitung für unzureichende Funktionen, bei der, wenn die temporäre oder chronische Verringerung der Fahrleistung einer der mehreren Fahrfunktionen des Fahrers detektiert wird, das Fahrzeug (1) so gesteuert bzw. geregelt wird, dass das Fahrzeug (1) stattdessen eine der Fahrfunktionen durch ein Fahrzeugsteuerungs- bzw. -regelungssystem (40) durchführt.

3. Fahrzeugsteuerungs- bzw. -regelungsvorrichtung (100) nach Anspruch 1 oder 2, wobei
die mehreren Fahrfunktionen des Fahrers zumindest eine einer Wahrnehmungsfunktion zum Wahrnehmen der Verkehrsumgebung und der Fahrumgebung, eine Bestimmungsfunktion zum Bestimmen eines erforderlichen Fahrbetriebs in der Verkehrsumgebung und der Fahrumgebung und eine Betriebsfunktion zum Durchführen des Fahrbetriebs beinhalten.

4. Fahrzeugsteuerungs- bzw. -regelungsvorrichtung (100) nach Anspruch 3, wobei die Fahrzeugsteuerungs- bzw. -regelungsvorrichtung (100) konfiguriert ist, die Wahrnehmungsfunktion als eine unzureichende Funktion zu identifizieren, und zwar basierend darauf, ob der Fahrer eine Blicklinie, einen Kopf und/oder einen Oberkörper bewegt.

5. Fahrzeugsteuerungs- bzw. -regelungsvorrichtung (100) nach Anspruch 3 oder 4, wobei die Fahrzeugsteuerungs- bzw. -regelungsvorrichtung (100) konfiguriert ist, die Bestimmungsfunktion als eine unzureichende Funktion zu identifizieren, und zwar basierend darauf, ob der Fahrer einen Bremsvorgang und/oder einen Lenkvorgang ausführt oder einleitet.

6. Fahrzeugsteuerungs- bzw. -regelungsvorrichtung (100) nach einem der Ansprüche 3 bis 5, wobei die Fahrzeugsteuerungs- bzw. -regelungsvorrichtung (100) konfiguriert ist, die Betriebsfunktion als eine unzureichende Funktion zu identifizieren, und zwar basierend darauf, ob ein vom Fahrer ausgeführter Betriebsbetrag ausreicht, um eine Kollision oder ein Rutschen des Fahrzeugs (1) zu verhindern.

7. Fahrzeugsteuerungs- bzw. -regelungsvorrichtung (100) nach einem der vorhergehenden Ansprüche, wobei
bei der Unterstützungsverarbeitung Informationen mit unterschiedlichem Inhalt entsprechend jeder der mehreren Fahrfunktionen des Fahrers bereitgestellt werden.

8. Fahrzeugsteuerungs- bzw. -regelungsvorrichtung (100) nach einem der vorhergehenden Ansprüche, wobei die Fahrzeugsteuerungs- bzw. - regelungsvorrichtung (100) konfiguriert ist, keine der Funktionensubstitutionsverarbeitungen, der Optimierungsverarbeitungen und der Unterstützungsverarbeitungen auszuführen, wenn keine unzureichende Fahrfunktion des Fahrers detektiert wird.

9. Fahrzeugsteuerungs- bzw. -regelungsvorrichtung (100) nach einem der vorhergehenden Ansprüche, ferner umfassend:
ein Motorsteuerungs- bzw. -regelungssystem (41), das der Lauf- bzw. Fahrfunktion entspricht;
ein Bremssteuerungs- bzw. -regelungssystem (42), das der Stoppfunktion entspricht; und
ein Lenksteuerungs- bzw. -regelungssystem (43), das der Wende- bzw. Abbiegefunktion entspricht.

10. Fahrzeugsteuerungs- bzw. -regelungsvorrichtung (100) nach einem der vorhergehenden Ansprüche, wobei die Fahrzeugsteuerungs- bzw. - regelungsvorrichtung (100) konfiguriert ist, ein Risiko einer Kollision und/oder eines Schleuderns basierend auf der Verkehrsumgebung und der Fahrumgebung vorherzusagen, um dazu verwendet zu werden, zu bestimmen, ob eine der Fahrfunktionen verloren gegangen ist oder verloren gehen wird und/oder ob die Fahrfähigkeit einer der Fahrfunktionen verringert ist.

11. Fahrzeug (1), umfassend die Fahrzeugsteuerungs- bzw. -regelungsvorrichtung (100) nach einem der vorhergehenden Ansprüche.

12. Fahrzeugsteuerungs- bzw. -regelungsverfahren zum Ausführen einer Fahrassistenzsteuerung bzw. -regelung für ein Fahrzeug (1), so dass das Fahrzeug (1) entsprechend der Verkehrsumgebung und der Fahrumgebung um das Fahrzeug (1) herum fährt, wobei das Fahrzeug (1) konfiguriert ist, unter Verwendung mehrerer Fahrfunktionen, die eine Lauf- bzw. Fahrfunktion, eine Stoppfunktion und eine Wende- bzw. Abbiegefunktion beinhalten, durch einen Fahrzeugbetrieb unter Verwendung mehrerer Fahrfunktionen eines Fahrers zu fahren, wobei das Fahrzeugsteuerungs- bzw. -regelungsverfahren umfasst:
einen Substitutionsschritt für alle Funktionen, in dem, wenn ein Verlust oder ein Anzeichen eines Verlusts einer der mehreren Fahrfunktionen des Fahrers detektiert wird, das Fahrzeug (1) so gesteuert bzw. geregelt wird, dass das Fahrzeug (1) stattdessen alle der mehreren Fahrfunktionen durchführt;
einen Optimierungsschritt, in dem, wenn eine temporäre Verringerung der Fahrleistung einer der mehreren Fahrfunktionen des Fahrers detektiert wird, das Fahrzeug (1) dahingehend gesteuert bzw. geregelt wird, die temporäre Verringerung der Fahrleistung zu beseitigen, indem dem Fahrer eine physische Stimulation zugeführt wird oder indem dem Fahrer Informationen bereitgestellt werden, die den Fahrer die temporäre Verringerung der Fahrleistung erkennen lassen; und
einen Unterstützungsschritt, in dem, wenn eine chronische Verringerung der Fahrleistung einer der mehreren Fahrfunktionen des Fahrers detektiert wird, das Fahrzeug (1) dahingehend gesteuert bzw. geregelt wird, die Fahrleistung aufrechtzuerhalten oder zu verbessern, indem dem Fahrer Informationen zur Unterstützung bei der Ausübung der Fahrleistung bereitgestellt werden,
wobei
bestimmt wird, dass eine der Fahrfunktionen verloren gegangen ist oder verloren gehen wird, wenn der Bewusstseinsverlust des Fahrers detektiert wird, bestimmt wird, dass die Fahrleistung einer der Fahrfunktionen temporär verringert ist, wenn Müdigkeit oder Schläfrigkeit des Fahrers detektiert wird, und bestimmt wird, dass die Fahrleistung einer der Fahrfunktionen des Fahrers chronisch verringert ist, wenn basierend auf Fahrfähigkeitsdaten bestimmt wird, dass die gegenwärtige Fahrfähigkeit des Fahrers geringer ist als die frühere Fahrfähigkeit des Fahrers.

## Revendications

1. Appareil de commande de véhicule (100) configuré pour exécuter une commande d'assistance de conduite pour un véhicule (1) de sorte que le véhicule (1) se déplace en fonction d'un environnement de circulation et d'un environnement de déplacement autour du véhicule (1), le véhicule (1) étant configuré pour se déplacer en utilisant une pluralité de fonctions de déplacement qui incluent une fonction de roulement, une fonction d'arrêt et une fonction de braquage, par une opération de véhicule utilisant une pluralité de fonctions de conduite d'un conducteur, l'appareil de commande de véhicule (100) étant configuré pour exécuter :
un traitement de substitution de toutes les fonctions dans lequel, lorsqu'une perte ou un signe de perte de l'une quelconque de la pluralité de fonctions de conduite du conducteur est détecté(e), le véhicule (1) est commandé de sorte que le véhicule (1) réalise l'ensemble de la pluralité de fonctions de conduite à la place ;
un traitement d'optimisation dans lequel, lorsqu'une réduction temporaire de performances de conduite de l'une quelconque de la pluralité de fonctions de conduite du conducteur est détectée, le véhicule (1) est commandé pour éliminer la réduction temporaire des performances de conduite en appliquant une stimulation physique au conducteur ou en fournissant au conducteur des informations qui font reconnaître au conducteur la réduction temporaire des performances de conduite ; et
un traitement d'assistance dans lequel, lorsqu'une réduction chronique des performances de conduite de l'une quelconque de la pluralité de fonctions de conduite du conducteur est détectée, le véhicule (1) est commandé pour maintenir ou améliorer les performances de conduite en fournissant au conducteur des informations sur l'assistance à l'exercice des performances de conduite,
dans lequel
l'appareil de commande de véhicule (100) est configuré pour déterminer que l'une quelconque des fonctions de conduite est perdue ou sur le point d'être perdue lorsqu'une perte de conscience du conducteur est détectée,
l'appareil de commande de véhicule (100) est configuré pour déterminer que les performances de conduite de l'une quelconque des fonctions de conduite sont temporairement réduites lorsqu'une fatigue ou somnolence du conducteur est détectée, et
l'appareil de commande de véhicule (100) est configuré pour déterminer que les performances de conduite de l'une quelconque des fonctions de conduite du conducteur sont chroniquement réduites lorsqu'il est déterminé, en fonction de données de capacité de conduite, que la capacité de conduite actuelle du conducteur est inférieure à la capacité de conduite antérieure du conducteur.

2. Appareil de commande de véhicule (100) selon la revendication 1, configuré en outre pour exécuter :
un traitement de substitution de fonction insuffisante dans lequel, lorsque la réduction temporaire ou la réduction chronique des performances de conduite de l'une quelconque de la pluralité de fonctions de conduite du conducteur est détectée, le véhicule (1) est commandé de sorte que le véhicule (1) réalise l'une quelconque des fonctions de conduite par un système de commande de véhicule (40) à la place.

3. Appareil de commande de véhicule (100) selon la revendication 1 ou 2, dans lequel
la pluralité de fonctions de conduite du conducteur incluent au moins une d'une fonction perceptuelle pour percevoir l'environnement de circulation et l'environnement de déplacement, d'une fonction de détermination pour déterminer une opération de conduite nécessaire dans l'environnement de circulation et l'environnement de déplacement, et d'une fonction d'opération pour réaliser l'opération de conduite.

4. Appareil de commande de véhicule (100) selon la revendication 3, dans lequel l'appareil de commande de véhicule (100) est configuré pour identifier la fonction perceptuelle comme une fonction insuffisante, en fonction du fait que le conducteur déplace une ligne visuelle, une tête et/ou un haut du corps.

5. Appareil de commande de véhicule (100) selon la revendication 3 ou 4, dans lequel l'appareil de commande de véhicule (100) est configuré pour identifier la fonction de détermination comme une fonction insuffisante, en fonction du fait que le conducteur réalise ou initie une opération de frein et/ou une opération de direction.

6. Appareil de commande de véhicule (100) selon l'une quelconque des revendications 3 à 5, dans lequel l'appareil de commande de véhicule (100) est configuré pour identifier la fonction d'opération comme une fonction insuffisante, en fonction du fait qu'une quantité d'opération réalisée par le conducteur est suffisante pour empêcher une collision ou un dérapage du véhicule (1).

7. Appareil de commande de véhicule (100) selon l'une quelconque des revendications précédentes, dans lequel
dans le traitement d'assistance, des informations avec un contenu différent sont fournies en fonction de chacune de la pluralité de fonctions de conduite du conducteur.

8. Appareil de commande de véhicule (100) selon l'une quelconque des revendications précédentes, dans lequel l'appareil de commande de véhicule (100) est configuré pour n'exécuter aucun du traitement de substitution de toutes les fonctions, du traitement d'optimisation et du traitement d'assistance lorsqu'aucune fonction de conduite insuffisante du conducteur n'est détectée.

9. Appareil de commande de véhicule (100) selon l'une quelconque des revendications précédentes, comprenant en outre :
un système de commande de moteur (41) correspondant à la fonction de roulement ;
un système de commande de frein (42) correspondant à la fonction d'arrêt ; et
un système de commande de direction (43) correspondant à la fonction de braquage.

10. Appareil de commande de véhicule (100) selon l'une quelconque des revendications précédentes, dans lequel l'appareil de commande de véhicule (100) est configuré pour prédire un risque d'une collision et/ou de patinage en fonction de l'environnement de circulation et l'environnement de déplacement de manière à être utilisé pour déterminer si l'une quelconque des fonctions de conduite est perdue ou sur le point d'être perdue, et/ou si la capacité de conduite de l'une quelconque des fonctions de conduite est réduite.

11. Véhicule (1) comprenant l'appareil de commande de véhicule (100) selon l'une quelconque des revendications précédentes.

12. Procédé de commande de véhicule destiné à exécuter une commande d'assistance de conduite pour un véhicule (1) de sorte que le véhicule (1) se déplace en fonction d'un environnement de circulation et d'un environnement de déplacement autour du véhicule (1), le véhicule (1) étant configuré pour se déplacer en utilisant une pluralité de fonctions de déplacement qui incluent une fonction de roulement, une fonction d'arrêt et une fonction de braquage, par une opération de véhicule utilisant une pluralité de fonctions de conduite d'un conducteur, le procédé de commande de véhicule comprenant :
une étape de substitution de toutes les fonctions dans laquelle, lorsqu'une perte ou un signe de perte de l'une quelconque de la pluralité de fonctions de conduite du conducteur est détecté(e), le véhicule (1) est commandé de sorte que le véhicule (1) réalise l'ensemble de la pluralité de fonctions de conduite à la place ;
une étape d'optimisation dans laquelle, lorsqu'une réduction temporaire de performances de conduite de l'une quelconque de la pluralité de fonctions de conduite du conducteur est détectée, le véhicule (1) est commandé pour éliminer la réduction temporaire des performances de conduite en appliquant une stimulation physique au conducteur ou en fournissant au conducteur des informations qui font reconnaître au conducteur la réduction temporaire des performances de conduite ; et
une étape d'assistance dans laquelle, lorsqu'une réduction chronique des performances de conduite de l'une quelconque de la pluralité de fonctions de conduite du conducteur est détectée, le véhicule (1) est commandé pour maintenir ou améliorer les performances de conduite en fournissant au conducteur des informations sur l'assistance à l'exercice des performances de conduite,
dans lequel
il est déterminé que l'une quelconque des fonctions de conduite est perdue ou sur le point d'être perdue lorsqu'une perte de conscience du conducteur est détectée,
il est déterminé que les performances de conduite de l'une quelconque des fonctions de conduite sont temporairement réduites lorsqu'une fatigue ou somnolence du conducteur est détectée, et
il est déterminé que les performances de conduite de l'une quelconque des fonctions de conduite du conducteur sont chroniquement réduites lorsqu'il est déterminé, en fonction de données de capacité de conduite, que la capacité de conduite actuelle du conducteur est inférieure à la capacité de conduite antérieure du conducteur.
